# EUROPEAN PATENT APPLICATION

(11) **EP 4 807 264 A1**
(43) Date of publication of application: **16.09.2026**
(21) Application number: 26164400.9
(22) Date of filing: 12.03.2026
(51) Int. Cl.: F24D 19/08, B01D 19/00, F16K 24/04

(54) **DEGASSING DEVICE**

(30) Priority: 14.03.2025 IT 202500005274
(71) Applicant: Far Rubinetterie S.P.A., 28024 Gozzano (NO) (IT)
(72) Inventor: ALLESINA, Guerrino, 28024 Gozzano (IT)
(74) Representative: Luppi Intellectual Property S.r.l.

(57) **Abstract**

A degassing device (1) is disclosed that comprises a containing body (2) suitable for being connected to a heating/cooling circuit conduit and shaped for housing filtering means (3) internally suitable for separating the gas from a heat transfer fluid circulating in the conduit, the containing body (2) comprises an upper opening (10) designed to be coupled with a relief valve (11) configured to enable the gas to escape outside the degassing device (1) and a containing wall (7) on which an inlet opening (4) and an outlet opening (5) are obtained that are connectable to the conduit to enable the heat transfer fluid to enter and exit the containing body (2), the containing body (2) further comprises baffle means (6) configured to increase the turbulence effect on the heat transfer fluid that flows in the containing body (2), the baffle means (6) being arranged between the containing wall (7) and the filtering means (3).

## Description

### Background of the invention

The invention relates to a degassing device that is applicable in a heating/cooling circuit provided with a containing body shaped for housing filtering means internally suitable for separating a gas from the heat transfer fluid circulating in said circuit.

As known, in heating plants, of both domestic and industrial type, a heat transfer fluid, in particular water, is circulated that, through the increase in the temperature thereof, leads to the formation of air in the circuit causing a decrease in the efficiency of the plant.

Also, in conditioning plants that use heat pumps it is necessary to provide devices that are able to expel gas from the distribution circuit of the heat transfer fluid. In these plants, in fact, a break-down of the heat exchanger can cause the coolant gas to enter the distribution circuit of the heat transfer fluid. The presence of this gas in the circuit does not only reduce the efficiency of the plant but is also a safety risk. It is thus essential to rapidly expel all the gas present in the distribution circuit in these plants.

In order to remove gas from the distribution circuit in heating plants, using deaerator devices is known.

Known deaerator devices comprise a connecting body provided with an inlet and an outlet that are connectable to a conduit portion of the heating plant to enable the water circulating in the latter to traverse the connecting body. The inside of the connecting body contains a filtering cartridge suitable for filtering the water that traverses the connecting body, promoting the separation of the air that is generated in the distribution circuit of the plant.

Known deaerator devices are further provided with a relief valve fixed to the connecting body to enable the air to be expelled from the deaerator device and thus from the circuit of the plant.

The air separated from the water accumulates in the deaerator device, rises to the relief valve, and is then expelled by the latter.

A deaerator device of known type is disclosed in patent application EP2607759A1.

Although deaerator devices of known type expel the gas present in the distribution circuit of a heat transfer, they have some drawbacks.

Known deaerator devices do not in fact enable great quantities of gas to be expelled. For example, in a domestic plant with a water flow rate of 3m³/h, a deaerator device of known type, having inlet and outlet connections to and from the connection body of 1" and 1/4 is able to completely expel a gas flow rate between 10 and 14 l/min. If the flowrate of gas in the distribution circuit of the heat transfer fluid is greater than 14 l/min, with the known device it is not possible to remove all the gas from the circuit with just one transit of the heat transfer fluid in the deaerator device. The flowrate of gas that can be expelled from the circuit is therefore insufficient, especially if gas coming from the heat pump enters the distribution circuit that has to be expelled immediately from the circuit for obvious reasons of safety.

It would be desirable to improve deaerator devices of known type, providing a solution that is able to increase the expelled flowrate of gas, thus improving safety, reliability, and performance of the heating and cooling plants.

### Summary of the invention

One object of the present invention is to improve deaerator devices of known type.

Another object is to increase the flowrate of gas expelled from a distribution circuit of a heat transfer fluid of a heating or cooling plant.

These objects and still others are achieved by a degassing device as specified in the claims appended to this description.

### Short description of the drawings

The invention can be better understood and implemented with reference to the appended drawings that illustrate embodiments thereof by way of non-limiting example, in which:

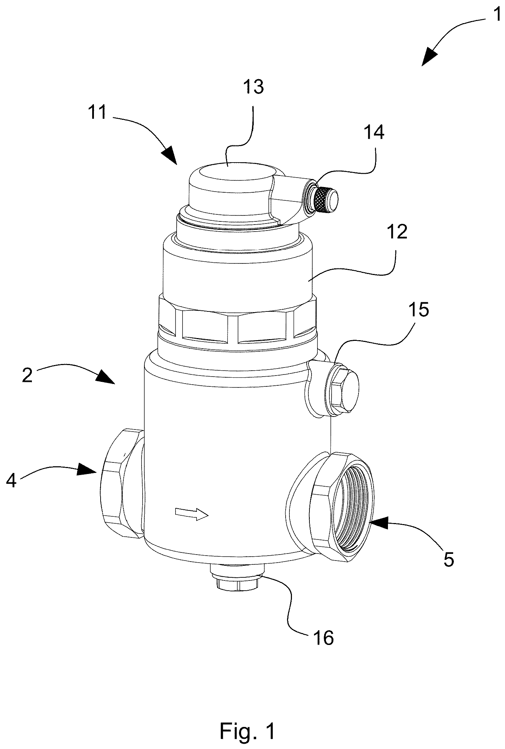

Figure 1 is a perspective view of a degassing device according to the present invention;

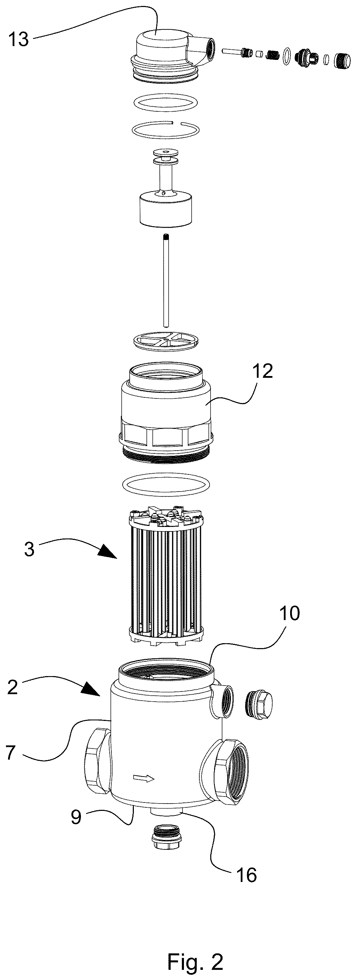

Figure 2 is an exploded view of the degassing device of Figure 1;

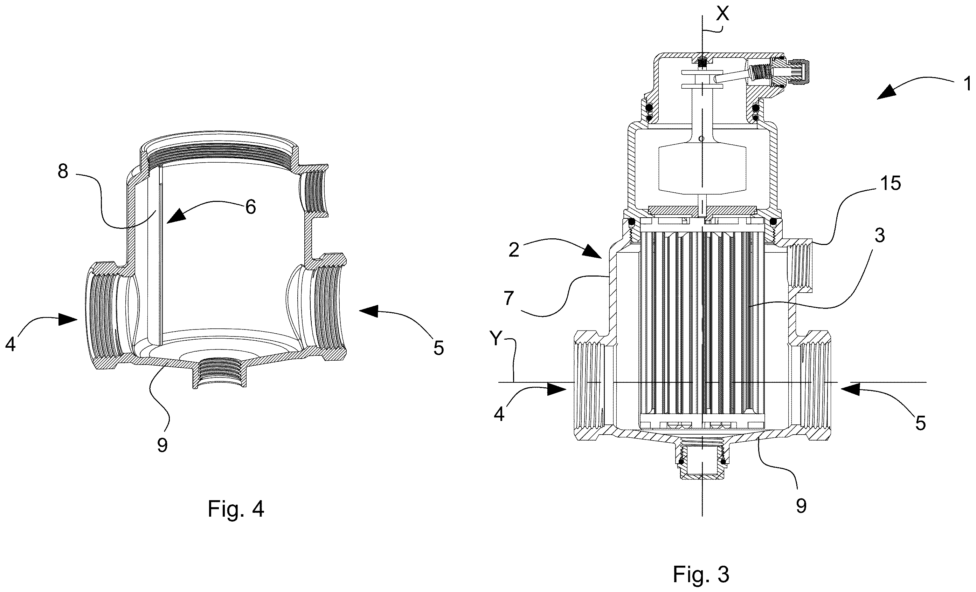

Figure 3 is a frontal section view of the device of Figure 1;
Figure 4 is a section view of a component of the device of Figure 1;
Figure 5 is a sectioned top view of the device of Figure 1;
Figure 6 is a sectioned top view of the component of Figure 4;

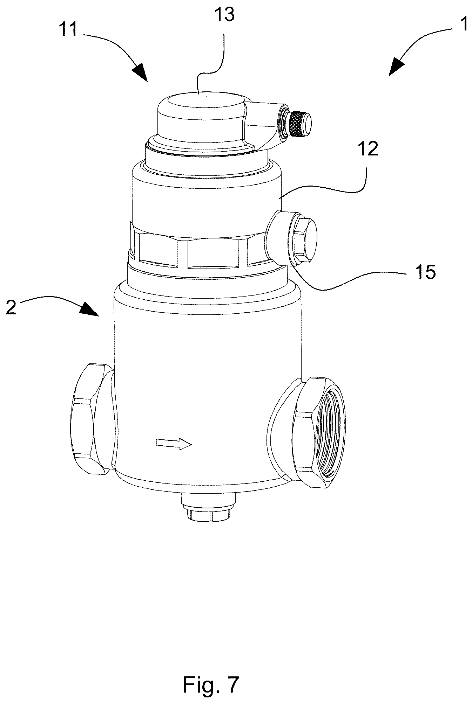

Figure 7 illustrates an embodiment of a degassing device according to the present invention.

### Detailed description

With reference to the appended figures, a degassing device 1 for a heating/cooling plant is disclosed.

The degassing device 1 comprises a containing body 2 suitable for being connected to a conduit of a circuit of the heating/cooling plant. In particular, the conduit of the circuit of the heating/cooling plant is the distribution circuit conduit of a heat transfer fluid, for example in a domestic or industrial environment.

The degassing device 1 comprises filtering means 3 suitable for separating a gas from the heat transfer fluid circulating in the conduit. In particular, a chamber that is suitable for housing the filtering means 3 is defined in the containing body 2.

The containing body 2 is shaped for housing internally the filtering means 3 and comprises a containing wall 7 on which an inlet opening 4 and an outlet opening 5 are obtained that are connectable to the conduit to enable the heat transfer fluid to enter and exit the containing body 2 and thus the degassing device 1. As illustrated, the containing wall 7 is cylindrical.

The inlet opening 4 extends along an inlet axis Y that defines an entering flow direction for the heat transfer fluid entering the degassing device 1. In particular, the inlet opening 4 comprises an inlet connection, which is connectable to the conduit. More in particular, the inlet connection extends along the inlet axis Y. Still more in particular, the inlet connection is of cylindrical shape.

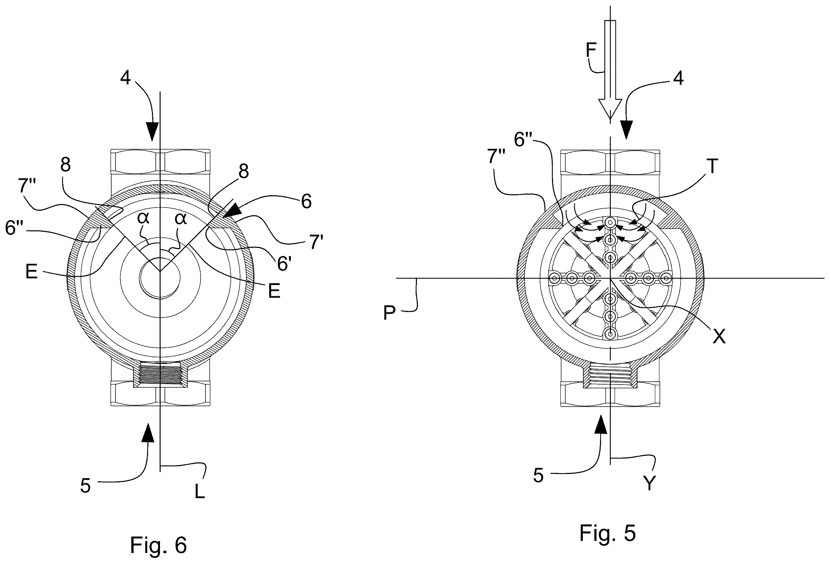

In Figure 5 the direction of the flow of heat transfer fluid entering the degassing device 1 is illustrated schematically by the arrow bearing the reference F.

Preferably, the outlet opening 5 extends coaxially to the inlet axis Y. In particular, the outlet opening 5 comprises an outlet connection that is connectable to the conduit. More in particular, the outlet connection extends along an axis that is coaxial with the inlet axis Y. Still more in particular, the outlet connection is cylindrical in shape.

The containing body 2 comprises an upper opening 10 suitable designed to be coupled with a relief valve 11 configured to enable the gas to escape outside the degassing device 1.

The containing body 2 further comprises a bottom wall 9. The bottom wall 9 and the upper opening 10 are arranged at opposite ends of the containing body 2. The containing wall 7 extends between the bottom wall 9 and the upper opening 10.

The containing body 2 comprises baffle means 6 configured to increase the turbulence effect on the heat transfer fluid that flows in the containing body 2. The baffle means 6 is arranged between the containing wall 7 and the filtering means 3. The baffle means 6 is shaped so as to act as a turbulence tripping zone and/or as a turbulence intensification zone. Accordingly, the baffle means 6 increases the turbulence in the flow of the heat transfer fluid that traverses the degassing device 1. This enables a greater quantity of gas to be separated from the heat transfer fluid that circulates in the circuit. In Figure 5 the curved arrows indicated with reference T schematize the turbulence inside the degassing device 1.

The baffle means 6 is further arranged so as to divert at least one part of the heat transfer fluid entering the containing body 2 to the filtering means 3.

The containing body 2 extends with a first axis X transverse to the inlet axis Y. In particular, the first axis X is perpendicular to the inlet axis Y. More in particular, the containing wall 7 extends parallel to the first axis X.

As illustrated, the axis of the upper opening 10 can be coaxial with the first axis X.

The baffle means 6 is arranged between a transverse plane P, orthogonal to the inlet axis Y and containing the first axis X, and the inlet opening 4. The transverse plane P divides into two parts the containing body 2. In particular, the transverse plane P identifies two portions of the containing body 2, a part provided with the inlet opening 4 and another part provided with the outlet opening 5. The baffle means 6 is thus arranged nearer the inlet opening 4 than the outlet opening 5.

The baffle means 6 is integral with the containing wall 7 and projects radially inside the containing body 2. In other words, the baffle means 6 is obtained on an inner surface of the containing wall 7 and projects from the inner surface of the containing wall 7 to the inside of the containing body 2. In particular, the baffle means 6 projects to the filter means 3.

The baffle means 6', 6", as illustrated, can extend on the containing wall 7, between the bottom wall 9 and the upper opening 10, parallel to the first axis X. In particular, the baffle means 6', 6" can extend over the entire height of the containing wall 7; where height of the containing wall 7 means the length of the containing wall 7 measured between the bottom wall 9 and the upper opening 10. Alternatively, the baffle means 7 can extend partially between the bottom wall 9 and the upper opening 10.

The baffle means 6 comprises two baffles 6', 6" arranged on opposite sides of a longitudinal plane L containing the first axis X and the inlet axis Y. In other words, the two baffles 6', 6" are arranged so as to respectively face opposite faces of the longitudinal plane L. In particular, the two baffles 6', 6" are obtained respectively on a first portion 7' and on a second portion 7" of the containing wall 7. The first portion 7' and the second portion 7" extend on sides opposite the longitudinal plane L. In other words, the first portion 7' and the second portion 7" face opposite faces of the longitudinal plane L.

Each of the two baffles 6', 6" comprises a respective protruding surface 8 facing the inlet 4. The protruding surface 8 of each baffle 6', 6" is tilted to convey the heat transfer fluid to the filtering means 3. The protruding surface 8 of each baffle 6', 6" is the surface facing the inlet opening 4. Each protruding surface 8 extends on a respective further plan E that is transverse to the containing wall 7. In this manner, the two protruding surfaces 8 lie on respective mutually transverse planes: the protruding surfaces 8 thus converge on a central zone of the chamber hosting the filtering means. Owing to this configuration, the entering fluid intercepts the protruding surfaces 8 with a speed component that is orthogonal to the protruding surfaces 8 themselves, this causing an increase in the turbulence of the fluid through the effect of the protruding surfaces 8 and is conveyed effectively to the filtering means. The aforesaid configuration thus causes a synergic combined conveying and turbulence effect on the fluid that increases degassing efficacy. According to one embodiment, this further transverse plane E is tilted by an angle α comprised between 30 and 70°, with respect to the longitudinal plane L. In particular, the angle α is 45°. In other words, the angle α is the angle having the sides belonging respectively to the longitudinal plane L and to the further transverse plane E to which the protruding surface 8 of the respective baffle 6', 6" belongs.

The containing wall 7 of containing body 2 extends between the bottom wall 9 and the upper opening 10 on a substantially cylindrical surface. In other words, the containing body 2 has a cylindrical shape and is provided with the containing wall 7, with the bottom wall 9, with the upper opening 10 and with the inlet 4 and outlet 5 openings. In particular, the containing wall 7 extends between the bottom wall 9 and the upper opening 10 parallel to the first axis X that coincides with the axis of the cylinder.

The filtering means 3, housed in the containing body 2, comprises a cylindrical filtering element 3. In particular, the filtering element 3 is arranged in the containing body 2 so that the axis of the filtering element is substantially coaxial with the first axis X.

The containing wall 7 that extends on a substantially cylindrical surface, and thus the containing body 2, has an inner diameter comprised between 1.3 and 2 times the outer diameter of the cylindrical filtering element 3. In particular, the inner diameter of the containing wall 7 is comprised between 1.5 and 1.8 the outer diameter of the cylindrical filtering element 3. The cylindrical filtering element 3 is arranged with clearance in the containing body 2. In other words, the cylindrical filtering element 3 and the two baffles 6', 6" integral with the containing wall 7 are spaced apart. In particular, the distance between the cylindrical filtering element 3 and the two baffles 6', 6" is greater than 2 mm. More in particular, the distance between the cylindrical filtering element 3 and the two baffles 6', 6" is 4 mm.

The degassing device 1 further comprises a relief valve 11 coupled with the containing body 2. The relief valve 11 is fitted at the upper opening 10 of the containing body 2.

More in detail, the relief valve 11 comprises a valve body 12 of substantially cylindrical shape and a cover element 13 provided with a gas discharge opening 14 coupled with an upper end of the valve body 12. The valve body 12 is coupled with the upper opening 10 and the cover element 13 is in turn coupled with the valve body 12.

In particular, the relief valve 11 is of the float type.

The containing wall 7 extends on a cylindrical surface having a diameter comprised between 1.2 and 1.7 times the diameter of the valve body 12. In other words, the ratio between the diameter of the containing body 2 and the diameter of the valve body 12 is comprised between 1.2 and 1.7. Preferably, the ratio between the diameter of the containing body 2 and the diameter of the valve body 12 is comprised between 1.2 and 1.5.

Further, the ratio between the volume of said containing body 2 and the volume of said valve body 12 is comprised between 2.5 and 4.

The filtering element 3 is kept in position inside the containing body 2 by the valve body 12. In an embodiment that is not illustrated, the filtering element can be kept in position inside the containing body 2 by the edges of the upper opening 10 or by a suitable seat obtained on the bottom wall 9, in particular inside the containing body 2.

The degassing device 1 can be provided with a further outlet 15 designed to be coupled with a safety valve or a pressure gauge. The further outlet 15 can be arranged on the containing body 2, in particular on the containing wall 7. Alternatively, the further outlet 15 can be provided on the valve body 12.

Further, the degassing device 1 can be provided with a discharge outlet 16 arranged on the bottom wall 9 to enable detritus to be expelled that accumulate inside the degassing device 1 on the bottom wall 9. In particular, the discharge outlet 16 is provided with a removable closing cap to enable the detritus to exit the degassing device 1.

The degassing device 1 according to the present invention achieves the set objects owing to the baffle means 6, which enables the turbulence to be increased inside the heat transfer fluid that traverses the containing body 2, thus enabling the entire quantity of gas possibly present in the heat transfer fluid during transit inside the degassing device 1 to be eliminated almost entirely.

Providing baffle means 6 inside the containing body 2, in particular arranged near the inlet opening 4, advantageously achieves, as a secondary effect, obtaining a significant increase in the flowrate of gas discharged by the degassing device 1. Also, the dimensional and geometric ratios disclosed enable the flowrate of gas expelled by the degassing device 1 to be increased.

In order to establish the optimum position of the baffle means 6, in particular of the baffles 6', 6", and the dimensional and geometric ratios disclosed above, an important an important laboratory experimentation campaign was conducted, a great number of tests being run.

Positioning the baffle means 6', 6" as disclosed above enabled an unexpectedly positive result to be reached. In fact, by comparing the gas-removal capacity of a known deaerator device with those of a degassing device 1 provided with baffle means 6', 6", it is observed that with the same overall dimensions and process parameters, the degassing device 1 according to the present invention enables complete expulsion of a flowrate of gas that is 4 - 5 times the flowrate of gas that a known device is able to expel. In fact, in a plant of domestic type with a water flowrate of 3m³/h, the degassing device according to the present invention, having inlet openings and outlet openings from the containing body of 1" and 1/4, enables a flowrate of gas greater than 50 l/min to be expelled completely.

## Claims

1. Degassing device (1) comprising a containing body (2) suitable for being connected to a heating/cooling circuit conduit and defining a chamber shaped to house internally filtering means (3) suitable for separating a gas from heat transfer fluid circulating in said conduit, said containing body (2) comprising a containing wall (7) on which an inlet opening (4) and an outlet opening (5) are obtained that are connectable to said conduit to enable the heat transfer fluid to enter and exit said containing body (2), said inlet opening (4) extending along an inlet axis (Y) that defines an entering flow direction for the heat transfer fluid entering said degassing device (1), said containing body (2) further comprising an upper opening (10) designed to be coupled with a relief valve (11) configured to enable said gas to escape outside said degassing device (1), **characterized in that** said containing body (2) comprises baffle means (6) configured to increase the turbulence effect on the heat transfer fluid that flows into said containing body (2) and arranged between said containing wall (7) and said filtering means (3).

2. Degassing device (1) according to claim 1, wherein said baffle means (6) is arranged so as to divert at least one part of the heat transfer fluid entering said containing body (2) to the filtering means (3) housed in said chamber.

3. Degassing device (1) according to claim 1 or 2, wherein said containing body (2) extends with a first axis (X) transverse to said inlet axis (Y), and wherein a transverse plane (P) orthogonal to said inlet axis (Y) and containing said first axis (X) divides said containing body (2) into two parts, wherein said baffle means (6) is arranged between said transverse plane (P) and said inlet opening (4).

4. Degassing device (1) according to any one of the preceding claims, wherein said baffle means (6) is integral with said containing wall (7) and projects radially inside the containing body (2).

5. Degassing device (1) according to claim 3 or according to claim 4 as appended to claim 3, wherein said baffle means (6) comprises two baffles (6', 6") arranged on opposite sides of a longitudinal plane (L) containing said first axis (X) and said inlet axis (Y).

6. Degassing device (1) according to claim 5, wherein said two baffles (6', 6") are obtained respectively on a first portion (7') and on a second portion (7") of said containing wall (7).

7. Degassing device (1) according to claim 5 or 6, wherein each of said two baffles (6', 6") comprises a respective protruding surface (8) facing said inlet (4), each protruding surface (8) extending on a respective further plane (E) transverse to said containing wall (7) tilted by an angle (α) comprised between 30° and 70° with respect to said longitudinal plane (L).

8. Degassing device (1) according to claim 2 or according to any one of claims 3 to 7 as appended to claim 2, wherein said containing wall (7) extends between a bottom wall (9) and said upper opening (10) on a substantially cylindrical surface, said bottom wall (9) and said upper opening (10) being arranged at opposite ends of said containing body (2), said filtering means (3) comprising a cylindrical filtering element (3), said containing wall (7) having an inner diameter comprised between 1.3 and 2 times the outer diameter of said cylindrical filtering element (3).

9. Degassing device (1) according to any one of the preceding claims, comprising a relief valve (11) coupled with said containing body (2), said relief valve (11) comprising a valve body (12) of substantially cylindrical shape and a cover element (13) provided with a gas discharge opening (14) coupled with an upper end of said valve body (12).

10. Degassing device (1) according to claim 9 wherein said containing wall (7) extends on a cylindrical surface having a diameter comprised between 1.2 and 1.6 times the diameter of said valve body (12).

11. Degassing device (1) according to claim 9 or 10, wherein the ratio between the volume of said containing body (2) and the volume of said valve body (12) is comprised between 2.5 and 4.

12. Degassing device (1) according to any one of claims 9 to 11, wherein said relief valve (11) is of the float type.

13. Degassing device (1) according to any one of the preceding claims, comprising a further outlet (15) designed to be coupled with a safety valve or a pressure gauge.
